# EUROPEAN PATENT APPLICATION

(11) **EP 3 588 766 A1**
(43) Date of publication of application: **01.01.2020**
(21) Application number: 19181150.4
(22) Date of filing: 19.06.2019
(51) Int. Cl.: H02P 5/68, H02P 5/74, H02P 5/46, B23K 9/12, B23K 9/133

(54) **PUSH-PULL WIRE FEED CONTROL SYSTEM**

(30) Priority: 26.06.2018 US 201816018377
(71) Applicant: The Esab Group, Inc., Florence, South Carolina 29506 (US)
(72) Inventor: ELDRIDGE, Richard Allen, Florence, SC 29506 (US)
(74) Representative: Murgitroyd & Company

(57) **Abstract**

A method for controlling a pull motor, the method including generating an error signal based on a difference between a signal representing a force applied on a wire by a push motor and a signal representing a desired force applied on the wire by the push motor; comparing a signal representing a force applied on the wire by the pull motor and the error signal, and generating an output signal based on the comparison; and controlling an armature current of the pull motor based on the output signal is disclosed.

## Description

### TECHNICAL FIELD

The present disclosure relates to a push-pull wire feed control system.

### BACKGROUND

A push-pull wire feed system may be used to advance a wire in a variety of applications, such as welding. The push-pull wire feed system includes a push motor and a pull motor. The push motor may be located near a wire source, such as a wire spool. The push motor exerts a force on the wire to push the wire through a wire conduit. The pull motor may be located at or near an end of the wire conduit. For example, the pull motor may be located in or near a welding head in a welding application. The pull motor exerts a force on the wire to pull the wire through the conduit.

### BRIEF DESCRIPTION OF THE DRAWINGS

FIG. 1 shows a push-pull wire feed system including a push-pull motor control system, according to an example embodiment.
FIG. 2 is a circuit diagram of the push-pull motor control system for controlling a pull motor, according to an example embodiment.
FIG. 3 is a block diagram of a computing system for controlling the pull motor, according to an example embodiment.
FIG. 4 is a plot of push motor armature current and pull motor armature current values over a period of time, according to an example embodiment.
FIG. 5 is a flowchart of a method for controlling the pull motor in a push-pull wire feed system, according to an example embodiment.

### DESCRIPTION OF EXAMPLE EMBODIMENTS

### Overview

Broadly, this disclosure is directed to controlling a force a pull motor exerts on a wire in a push-pull wire feed system. The push-pull wire feed system may include a push motor and a pull motor. The push motor armature current and the pull motor armature current are representative of a force applied by the push motor and the pull motor, respectively, on the wire. The system compares a signal representative of the push motor force with a signal representative of a desired push motor force to generate an error signal. The system compares the error signal with a signal representative of the pull motor force. Based on this comparison, the system generates an output signal to control the pull motor armature current. For example, when the signal representative of the pull motor force is greater than the error signal, the output signal may cause the pull motor armature current to decrease. In contrast, when the signal representative of the pull motor force is less than the error signal, the output signal may cause the pull motor armature current to increase.

### Example Embodiments

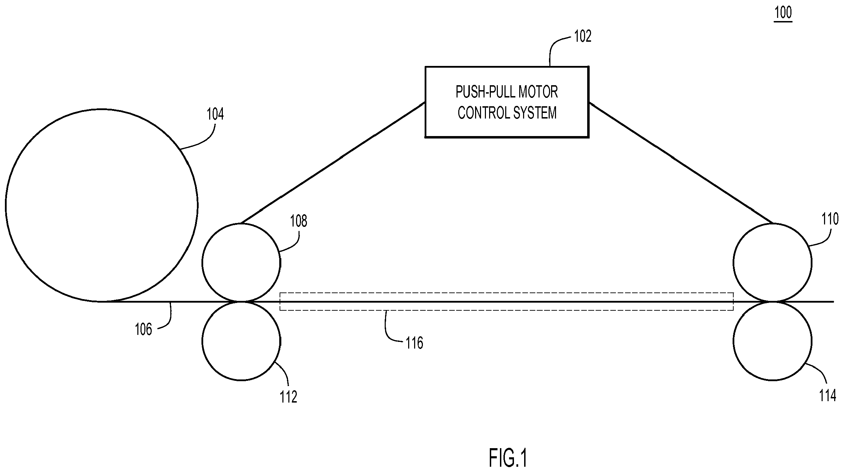

With reference made to FIG. 1, shown is a push-pull wire feed system 100 including a push-pull motor control system 102, according to an example embodiment. The push-pull wire feed system 100 may include a wire source 104, such as a wire spool. The wire source 104 may include wire to be used in, for example, a welding application, such as wire 106. The push-pull wire feed system 100 may also include a push motor 108 and a pull motor 110. The push motor 108 and the pull motor 110 may exert a force on the wire 106 to advance the wire 106. For example, the push motor 108 may exert a force on the wire 106 to push the wire 106 towards the pull motor 110 while the pull motor 110 may exert a force on the wire 106 to pull the wire 106 towards itself. The push-pull wire feed system 100 may also include a push motor biasing member 112 and a pull motor biasing member 114. The push motor biasing member 112 and the pull motor biasing member 114 may bias the wire 106 into a desired position. For example, the push motor biasing member 112 may position the wire 106 so that the wire 106 enters a wire conduit 116. The wire conduit 116 may be positioned in between the push motor 108 and push motor biasing member 112 and the pull motor 110 and the pull motor biasing member 114. The wire conduit 116 may define a path the wire 106 takes from the push motor 108 to the pull motor 110. It should be appreciated that the wire conduit 116 may be any length and also may include any number of bends or curves.

In welding applications, the wire 106 being fed may have a small diameter and/or be relatively soft. Feeding the wire 106 through the wire conduit 116 may be problematic, especially if the wire conduit 116 is relatively long and/or contains many bends or curves. For example, the force required to push the wire 106 through the wire conduit 116 using the push motor 108 may be greater than a column strength of the wire 106. Under such circumstances, the wire 106 may buckle at a point of entry of the wire conduit 116, resulting in tangle of wire, commonly referred to as a bird's nest. While wire conduits with lower friction have tended to reduce undesirable bird's nests, the problem nevertheless persists.

The pull motor 110 may be used to decrease the amount of force the push motor 108 needs to exert on the wire 106 for the wire 106 to pass through the conduit 116. There are two variants of systems including a pull motor: a pull-push wire feed system (not shown) and a push-pull wire feed system, such as the push-pull wire feed system 100. In the pull-push wire feed system, the pull motor may determine a speed of wire delivery while the push motor may be torque limited. Because the push motor is torque limited, the push motor may be used to assist the pull motor but not to apply sufficient force to cause the wire to buckle and cause a bird's nest. One drawback to the pull-push wire feed system in welding applications is that the pull motor applies the majority of the force on the wire. However, the pull motor, as noted, must be kept relatively small because of its location in, for example, a welding torch. Such a size limitation may prevent the pull motor from exerting sufficient force on the wire, and may accordingly cause wire feed delivery to be slower than desired. Another drawback is that, also because of size limitations, it is difficult to include a tachometer in a torch-mounted pull motor, and may accordingly cause wire feed delivery to be less accurate.

In the push-pull wire feed system 100, the wire feed delivery speed of the wire 106 is determined by the push motor 108. The push motor 108 is generally regulated by a tachometer, which enables wire feed delivery to be more accurate. In the push-pull wire feed system 100, the pull motor 110 exerts a force on the wire 106 to relieve some of the load from the push motor 108. To relieve load from the push motor 108, the pull motor 110 may be matched in speed characteristics to the push motor 108.

In both the pull-push wire feed system and the push-pull wire feed system 100, any calibration that was performed for a given push motor and pull motor configuration is static. In other words, once the wire feed system is calibrated, the wire feed system does not adapt to changes in restriction of the wire conduit, such as conduit wear, conduit length, bends in the conduit, *etc.* or changes to, for example, the welding torch in welding applications. As a result, any change, such as a different welding torch or a different wire conduit, requires a manual recalibration.

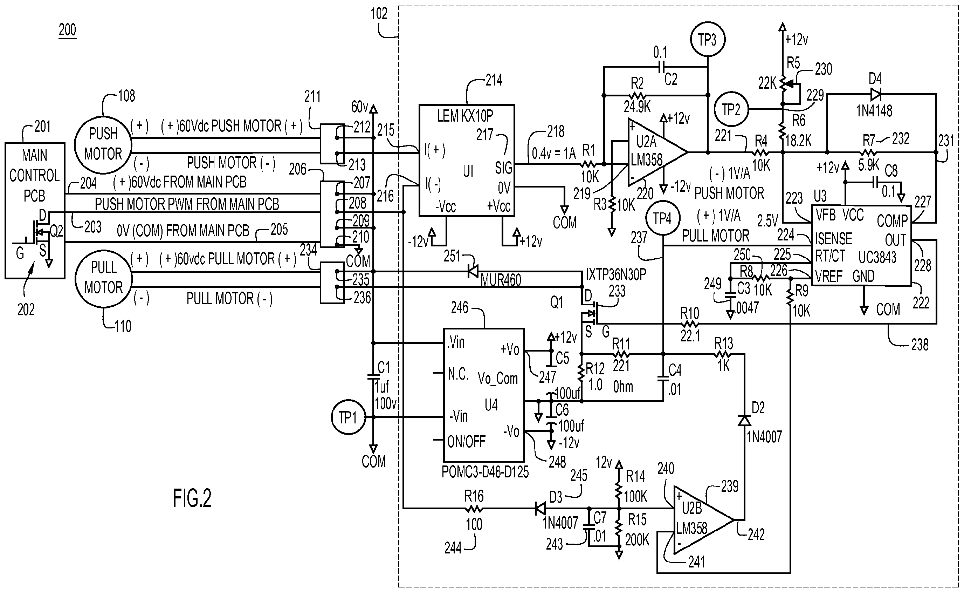

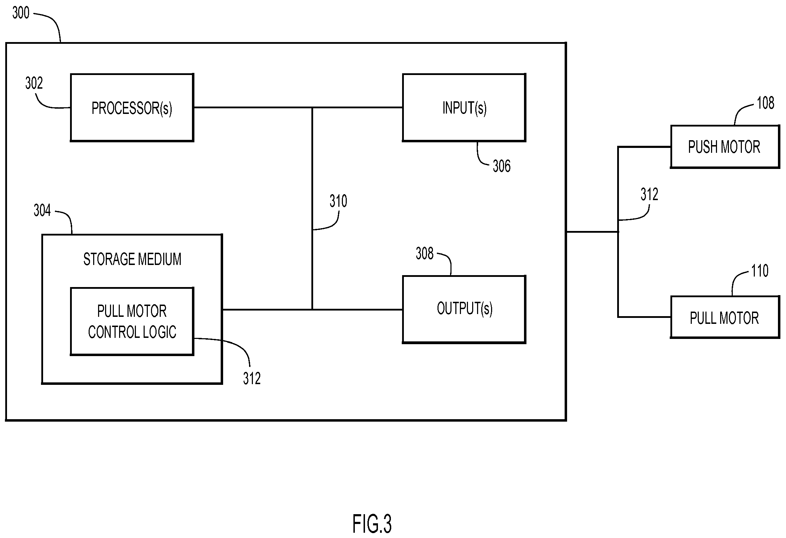

Turning to FIG. 2, and with continuing reference to FIG. 1, shown is a circuit 200 of the push-pull wire feed system 100 including the push-pull motor control system 102 for controlling the pull motor 110, according to an example embodiment. The circuit 200 may quantify the force applied to the wire 106 by the push motor 108 to control the force applied by the pull motor 110 on the wire 106. By controlling the force applied by the pull motor 110, the circuit may regulate the force applied by the push motor 108 to the wire 106. The push motor armature current is proportional to the force applied by the push motor 108 on the wire 106. Based on the push motor armature current, the push-pull motor control system 102 may determine if more or less assistance, i.e., force applied on the wire 106, is required from the pull motor 110. The pull motor 110 may be controlled by, for example, a current mode controller, as described with respect to FIG. 2, or a computing system, as described with respect to FIG. 3. Like the push motor 108, the pull motor armature current is proportional to the force applied by the pull motor 110 on the wire 106. The push-pull motor control system 102 is designed so that when the wire 106 is being fed, the speed of the pull motor may adjust to match the speed of the push motor 108.

More specifically, the circuit 200 may include a main control printed circuit board (PCB) 201. The PCB 201 is shown in a simplified form as including a switch 202. The switch 202 may be a metal-oxide-semiconductor field effect transistor (MOSFET), for example. It should be appreciated that the MOSFET may be an n-type or a p-type MOSFET. Other circuit elements, such as a bipolar junction transistor (BJT), may also be used. The switch 202 may provide a push motor pulse width modulation (PWM) signal 203 to the push-pull motor control system 102, as described in more detail herein. In some embodiments, a tachometer (not shown) may also be included within the PCB 201. The PCB 201 may also supply a positive power supply 204 and a negative power supply 205. For example, as shown in FIG. 2, the positive power supply 204 is 60 V and the negative power supply is 0 V. However, it should be appreciated that any value for the positive power supply 204 and the negative power supply 205 may be used. The PCB 201 may be connected to connector 206, which may have connections 207 - 210. The positive power supply 204 may be connected to connection 207, the push motor PWM signal 203 may be connected to connection 208, and the negative power supply 205 may be connected to connection 210.

The circuit 200 also may include a connector 211 that may connect to the push motor 108. The connector 211 may include connection 212 and connection 213. Connection 212 may be connected to the connection 207 and the positive power supply 204. Connection 212, and therefore the positive power supply 204, may be connected to a positive terminal of the push motor 108 while connection 213 may be connected to a negative terminal of the push motor 108. Therefore, the push motor armature current may flow through connection 212 to the positive terminal of the push motor 108. The push motor armature current may return from the push motor 108 to connection 213 via the negative terminal of the push motor 108.

The push motor armature current may then be input to a Hall effect sensor 214, such as an open loop Hall effect sensor shown in FIG. 2. The Hall effect sensor 214 may include an input 215 for current entering the Hall effect sensor 214 and an output 216 for current exiting the Hall effect sensor 214. Based on the push motor current, the Hall effect sensor 214 may output, on output 217, a signal representative of the current entering on input 215 and exiting on output 216. Here, the push motor armature current enters at input 215 and exits on output 216. Therefore, the output 217 may output a signal 218 that is proportional to the push motor armature current. For example, the signal 218 may be a voltage signal. In this embodiment, the Hall effect sensor 214 generates 0.4 V for every 1 A of push motor armature current. Therefore, the signal 218 on output 217 may be a voltage representative of the push motor armature current. Because the push motor armature current is representative of the force the push motor 108 exerts on the wire 106, the signal 218 on output 217 is also representative of the force the push motor 108 exerts on the wire 106. It should be appreciated that the Hall effect sensor 214 may output any signal representative of the push motor armature current and the force the push motor 108 exerts on the wire 106, not just a voltage. However, for exemplary purposes only, the signal 218 on output 217 will be described as a voltage representative of the push motor force 218.

The voltage representative of the push motor force 218 may be input into a negative terminal 219 of an operational amplifier 220. The gain of the operational amplifier 220 may be set to -1. In other words, the operational amplifier 220 may invert the voltage representative of the push motor force 218 to produce an inverted voltage representative of the push motor force 221. The inverted voltage representative of the push motor force 221 may be provided to a current mode PWM controller 222, such as UC 3843 from Texas Instruments®. The current mode PWM controller 222 may include four input terminals 223 - 226 and two output terminals 227 - 228. The inverted voltage representative of the push motor force 221 may be received at input terminal 223 of the current mode PWM controller 222. The input terminal 223 of the current mode PWM controller 222 may be a summing junction. The inverted voltage representative of the push motor force 221 may be summed with a signal representative of a desired push motor force 229. For exemplary purposes only, the signal representative of a desired push motor force 229 will be described as a voltage. The voltage representative of the desired push motor force 229 may be controlled by, for example, a variable resistor 230, such as a potentiometer. A first terminal of the variable resistor 230 may be connected to a positive power supply while a second terminal of the variable resistor 230 may be connected, directly or indirectly, to the input terminal 223. A value of the variable resistor 230 may be predetermined, such as at a factory. Alternatively, the value of the variable resistor 230 may be set by a user of the push-pull wire feed system 100 based on, for example, a particular application.

Another signal that may be summed at the summing junction at input terminal 223 is an error, or feedback, signal 231 generated by the current mode PWM controller 222 and output on the output terminal 227, as described in more detail below. The error signal 231 may be based, at least in part, on a difference between the inverted voltage representative of the push motor force 221 and the voltage representative of the desired push motor force 229.

The summed signal received at input terminal 223 may be a first input into an amplifier (not shown) included in the current mode PWM controller 222. A second input to the amplifier included in the current mode PWM controller 222 may be a constant voltage, such as 2.5 V. In one embodiment, the constant voltage may be an internal reference of the current mode PWM controller 222. The amplifier included in the current mode PWM controller 222 may have a gain characteristic that compares the input at the input terminal 223 to the constant voltage, here 2.5 V. The output of the amplifier may be provided on the output terminal 227 of the current mode PWM controller 222 as the error, or feedback, signal 231. The error signal 231 may be provided to the summing junction, as described above. The error signal 231 may be provided to the summing junction via a resistor 232. Resistor 232 may be used to control a gain of the amplifier included in the current mode PWM controller 222. In other words, the resistor 232 may be used to regulate the magnitude of the error signal. Therefore, the resistance of resistor 232 may determine how tightly the current mode PWM controller 222 attempts to regulate the pull motor armature current, as described herein.

Regarding the pull motor armature current, the pull motor armature current may be controlled by a switch 233, such as a MOSFET, as shown in FIG. 2. The circuit 200 includes a connector 234 that may connect to the pull motor 110. The connector 234 may include connection 235 and connection 236. The positive power supply 204 may be connected to a positive terminal of the pull motor 110 through connection 235 of connector 234 while connection 236 of connector 234 may be connected to a negative terminal of the pull motor 110. Therefore, the pull motor armature current may flow through connection 235 of connector 234 to the positive terminal of the pull motor 110. The pull motor armature current may return from the pull motor 110 to connection 236 of connector 234 via the negative terminal of the pull motor 110. When the switch 233 is closed, or active when using a MOSFET, the pull motor armature current may flow through the switch 233. However, when the switch 233 is open, or inactive when using a MOSFET, the pull motor armature current may decrease. When the switch 233 is open or inactive for a sufficient amount of time, the pull motor armature current may become zero. The pull motor armature current may be converted to a signal representative of the pull motor force 237 exerted on the wire 106. This conversion may happen in a 1:1 ratio. For exemplary purposes only, the signal representative of the pull motor force 237 is described herein as a voltage.

The voltage representative of the pull motor force 237 may be provided as an input to the current mode PWM controller 222 on input terminal 224. The current mode PWM controller 222 may compare the voltage representative of the pull motor force 237 with the error, or feedback, signal 231. In some embodiments, a fraction of the error signal 231, such as 1/3, may be compared with the voltage representative of the pull motor force 237. A result of this comparison may be provided on output terminal 228 of the current mode PWM controller 222 as an output signal 238. The output signal 238 may be provided to the switch 233 to control when the switch 233 is active or inactive. For example, when the switch 233 is a MOSFET, the output signal 238 may be provided to a gate of the MOSFET, which controls when the MOSFET is active or inactive. When the voltage representative of the pull motor force 237 is greater than or exceeds the error signal 231, or a predetermined fraction of the error signal 231, the output signal 238 may go low. Conversely, when the voltage representative of the pull motor force 237 is less than the error signal 231, or a predetermined fraction of the error signal 231, the output signal 238 may go high. Therefore, the output signal 238 may be a pulsed output. The duty cycle of the output signal 238 may be a time it takes for the voltage representative of the pull motor force 237 to exceed the error signal 231, or a predetermined fraction of the error signal 231.

More particularly, when the voltage representative of the pull motor force 237 is greater than the error signal 231, the pull motor armature current may be too high. As described above, when this happens, the output signal 238 may go low. The output signal 238 going low may cause the switch 233 to become inactive, thereby causing an open circuit for the pull motor armature current. This causes the pull motor 110 to freewheel through diode 251 and the pull motor armature current decreases.

When the pull motor armature current is decreased to such a level that the voltage representing the pull motor force 237 is less than the error signal 231, the output signal 238 may go high. When output signal 238 goes high, the switch 233 may become active. When the switch 233 is active, the pull motor armature current circuit is closed, thereby increasing the pull motor armature current. This cycle is repeated as the voltage representative of the pull motor force 237 increases or decreases relative to the error signal 231.

A frequency of the output signal 238 may be determined by input terminal 225. For example, a resistor-capacitor (RC) time constant may be used to set the frequency of the output signal 238. When setting the frequency of the output signal 238 using an RC time constant, a capacitor, such as capacitor 249, may be connected to ground while a resistor, such as resistor 250, may be connected to input terminal 226. A capacitance of capacitor 249 and a resistance of resistor 250 determine the RC time constant, which sets the frequency for the output signal 238.

In some embodiments, operation of the pull motor 110 may be disabled. For example, the pull motor 110 may be disabled when, for example, the push motor 108 is not running. Broadly, a comparator may be used to disable the pull motor 110 when the push motor 108 is not running and enable the pull motor 110 when the push motor 108 is running.

More specifically, a comparator 239 may receive inputs on a first connection 240 and a second connection 241. The first connection 240 may receive the push motor PWM signal 203 from the PCB 201, as described above. When the push-pull wire feed system 100 is turned on but the push motor 110 is not yet running, the push motor PWM signal 203 may be high. When the push motor PWM signal 203 is high, an output 242 of the comparator 239 may be driven high as well. The output 242 of the comparator 239 may be received at input terminal 224, i.e., the input that receives the voltage representative of the pull motor force 237, of the current mode PWM controller 222. As described above, when the voltage representative of the pull motor force 237 is greater than the error signal 231, the output signal 238 is driven low. Therefore, because the voltage representative of the pull motor force 237 is driven high by the output 242, the output signal 238 is low. When the output signal 238 is low, the switch 233 is inactive and the pull motor armature current is decreased. However, because the pull motor armature current is zero because the push-pull wire feed system 100 was just turned on, the pull motor armature current is prevented from increasing, thereby disabling the pull motor 110.

In contrast, when the push motor 108 is running, the push motor PWM signal 203 may be low. When the push motor PWM signal 203 is low, a capacitor 243 may discharge through resistor 244 and diode 245. The discharge rate of the capacitor 243 may be such that the value of the first connection 240 of the comparator 239 does not exceed the value of the second connection 241 of the comparator 239. A value of the signal at the second connection 241 of the comparator 239 may be a constant voltage, such as 2.5 V. The discharge of the capacitor 243 may cause the output 242 of the comparator 239 to be driven low. This results in controlling the pull motor armature current as described above.

The push-pull motor control system 102 may provide power to each component within the push-pull motor control system 102 via a power converter 246. The power converter 246 may be, for example, a DC to DC power converter. The power converter 246 may receive as inputs the positive power supply 204 and the negative power supply 205. As described above, the positive power supply 204 is 60 V and the negative power supply 205 is 0 V. The power converter 246 may convert the positive power supply 204 and the negative power supply 205 to a converted positive power supply 247 and a converted negative power supply 248. In this example, the converted positive power supply 247 is 12 V and the converted negative power supply 248 is -12 V. The converted positive power supply 247 and the converted negative power supply 248 may be used to provide power to other components of the push-pull motor control system 102, such as the Hall effect sensor 214, the operational amplifier 220, the current mode PWM 222, and the comparator 239.

Therefore, the circuit 200 provides techniques for controlling the pull motor armature current in response to deviations of the push motor armature current from the desired push motor armature current. The techniques enable the push-pull wire feed system 100 to adapt to changes in the wire conduit 116 and/or changes to the pull motor 110 without requiring a manual reconfiguration of the push-pull wire feed system 100.

Turning to FIG. 3, and with continuing reference to FIG. 1, shown is a block diagram of a computing system 300 for controlling the pull motor armature current, according to an example embodiment. The computing system 300 may include a processor 302, a storage medium 304, an input 306, and an output 308. It should be appreciated that any number of processors 302, storage media 304, inputs 306, and outputs 308 may be included. A first communication bus 310 may be used to enable communication between the processor 302, the storage medium 304, the input 306, and the output 308. The storage medium 304 may include pull motor control logic 312, as described in more detail herein. The processor 302 may be configured to execute instructions stored in the storage medium 304, such as the pull motor control logic 312. The computing system 300 may be connected to the push motor 108 and the pull motor 110 via a second communication bus 312. The input 306 may be configured to receive data, such as a signal representative of a force applied on the wire 106 by the push motor 108, a signal representative of a desired force to be applied on the wire 106 by the push motor 108, and a signal representative of a force applied on the wire 106 by the pull motor 110. The output 308 may be configured to output a signal to increase or decrease the pull motor armature current.

For example, the computing system 300 may receive from the push motor 108 a signal representative of a push motor armature current. As described above, the push motor armature current may be representative of a force applied on the wire 106 by the push motor 108. The processor 302 may be configured to convert the signal representative of the push motor armature current to a signal that is representative of the force applied on the wire 106 by the push motor 108. The computing system 300 may also receive a signal representative of a desired force to be applied on the wire 106 by the push motor 108. The pull motor control logic 312 may cause the processor 302 to compute a difference between the signal representative of the force applied on the wire 106 by the push motor 108 and the signal representative of a desired force to be applied on the wire 106 by the push motor 108. The difference may be an error, or feedback, signal.

The computing system 300 may also receive as an input a signal representative of the force the pull motor 110 exerts on the wire 106. The signal representative of the pull motor force may be, for example, the pull motor armature current. The pull motor control logic 312 may cause the processor 302 to compare the signal representative of the pull motor force to the error, or feedback, signal. In one embodiment, the pull motor control logic 312 may cause the processor 302 to compare the signal representative of the pull motor force to a fraction of the error signal, such as 1/3. Based on this comparison, the processor 302 may compute an output signal. The output signal may control the pull motor armature current. For example, when the signal representative of the pull motor force is less than the error signal, the output signal may cause the pull motor armature current to increase without specifying an exact pull motor armature current. When the signal representative of the pull motor force is greater than the error signal, the output signal may also cause the pull motor armature current to decrease without specifying an exact pull motor armature current.

The computing system 300 may also receive as an input a signal indicating whether the push motor 108 is running. For example, the signal indicating whether the push motor 108 is running may be a PWM signal. The computing system 300 may output a signal to enable or disable the pull motor 110 based on the signal indicating whether the push motor 108 is running. For example, when the signal indicates that the push motor 108 is not running, the computing system 300 may output a signal that keeps the pull motor armature current at zero, thereby disabling the pull motor 110. In contrast, when the signal indicates that the push motor 108 is running, the computing system 300 may output a signal that enables the pull motor current by controlling the pull motor armature current as described above.

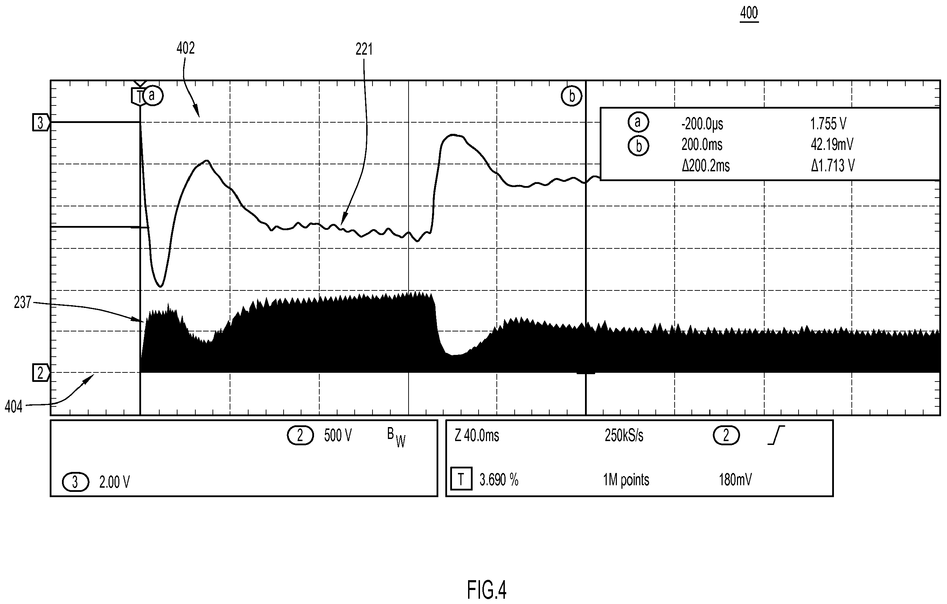

Turning to FIG. 4, and with continuing reference to FIG. 2, shown is a plot 400 of signal values over a period of time, according to an example embodiment. The plot 400 may be obtained using, for example, an oscilloscope. The plot 400 includes the inverted voltage representative of the push motor force 221 and the voltage representative of the pull motor force 237. The inverted voltage representative of the push motor force 221 is centered at division 402 and the voltage representative of the pull motor force 237 is centered at division 404. Each vertical division for the inverted voltage representative of the push motor force 221 is 2 V per division while each vertical division for the voltage representative of the pull motor force 237 is 500 mV per division. The horizontal time divisions represent 40 milliseconds.

The plot 400 illustrates a response to a welding torch being operated. There is an initial 8 V peak for the inverted voltage representative of the push motor force 221 which quickly drops to 2 V. After approximately 80 milliseconds, the push motor has accelerated to a set speed and the inverted voltage representative of the push motor force 221 drops as the acceleration of the push motor 108 is reduced. After approximately 200 milliseconds, the inverted voltage representative of the push motor force 221 has stabilized to approximately 2.5 V.

The voltage representative of the pull motor force 237 changes in response to changes of the inverted voltage representative of the push motor force 221. For example, as the magnitude of the inverted voltage representative of the push motor force 221 increases, the voltage representative of the pull motor force 237 increases as well. Under such circumstances, the voltage representative of the pull motor force 237 increases so that the push motor 108 does not exert excessive force on the wire 106, for example, which may cause the wire 106 to buckle and cause a birds nest. Conversely, when the magnitude of the inverted voltage representative of the push motor force 221 decreases, the voltage representative of the pull motor force 237 decreases as well. Under such circumstances, the push motor 108 is exerting less force on the wire 106. Therefore, less assistance is required from the pull motor 110 to lower the risk of the push motor 108 exerting an excessive force on the wire 106.

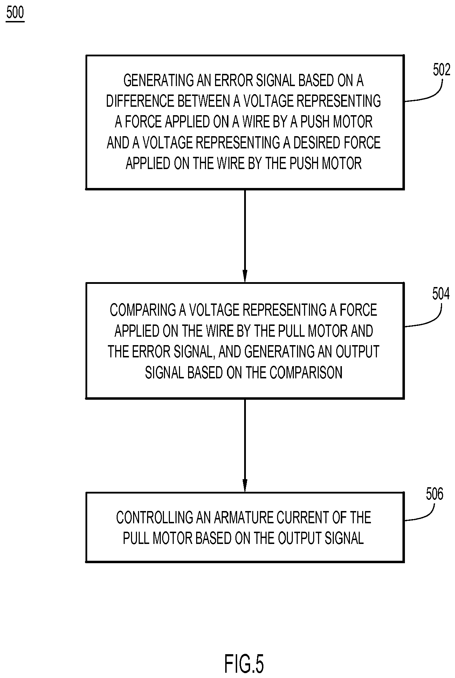

Turning to FIG. 5, and with continuing reference to FIGS. 2 and 3, shown is a flowchart of a method 500 for controlling the pull motor armature current in the push-pull wire feed system 100, according to an example embodiment. The method 500 may be performed by the current mode PWM controller 222 or the computing system 300. For exemplary purposes only, the operation of method 500 is described with reference to the current mode PWM controller 222. At operation 502, the current mode PWM controller 222 may generate the error signal 231. The error signal 231 may be generated based on a difference between a signal representing the force applied on the wire 106 by the push motor 108 and a signal representing a desired force applied on the wire 106 by the push motor 108. For example, this difference may be received as an input at input terminal 223, as described above with reference to FIG. 2.

At operation 504, the current mode PWM controller 222 may compare a signal representing a pull motor force 237 and the error signal 231. The output signal 238 may be based on this comparison. For example, the current mode PWM controller 222 may compare the signal representing the pull motor force 237 with the error signal 231, or a fraction of the error signal 231, such as 1/3. The current mode PWM controller 222 may cause the output signal 238 to be high when the signal representing the pull motor force 237 is less than the error signal 231. The current mode PWM controller 222 may cause the output signal 238 to be low when the signal representing the pull motor force 237 is greater than the error signal 231.

At operation 506, the output signal 238 generated in operation 504 may be used to control the pull motor armature current and, therefore, the pull motor force applied on the wire 106. For example, as described in FIG. 2, the output signal 238 may control a switch 233 that controls the pull motor armature current. In one embodiment, when the output signal 238 is high, the switch 233 may be active, thereby causing the pull motor armature current to increase. However, when the output signal 238 is low, the switch 233 may be inactive, thereby causing the pull motor armature current to decrease.

In summary, a method for controlling a pull motor is disclosed. The method includes generating an error signal based on a difference between a signal representing a force applied on a wire by a push motor and a signal representing a desired force applied on the wire by the push motor; comparing a signal representing a force applied on the wire by the pull motor and the error signal, and generating an output signal based on the comparison; and controlling an armature current of the pull motor based on the output signal.

More particularly, the method may also include decreasing the armature current provided to the pull motor when the signal representing the force applied on the wire by the pull motor is greater than the error signal and increasing the armature current provided to the pull motor when the signal representing the force applied on the wire by the pull motor is less than the error signal.

Moreover, the signal representing the force applied on the wire by the push motor is based on an armature current of the push motor.

Additionally, the magnitude of the error signal is regulated based on a resistance of a feedback resistor.

Also, the output signal, which may be a pulse width modulated signal, may control a switch, such as a MOSFET, that controls the armature current provided to the pull motor.

Moreover, the method may also include determining when the push motor is in a non-operating state. When the push motor is in the non-operating state, the method may control the output signal so that the armature current provided to the pull motor is zero.

Finally, the output signal may have a frequency that is controlled by a resistor-capacitor network.

In another embodiment, an apparatus for controlling the pull motor armature current is disclosed. More particularly, the apparatus may include a computer-readable storage medium configured to store computer-executable instructions and a processor coupled with the computer-readable storage medium and configured to execute the computer-executable instructions. The computer-executable instructions may include generating an error signal based on a difference between a signal representing a force applied on a wire by a push motor and a signal representing a desired force applied on the wire by the push motor; comparing a signal representing a force applied on the wire by the pull motor and the error signal, and generating an output signal based on the comparison; and controlling an armature current of the pull motor based on the output signal.

In yet another embodiment, one or more non-transitory computer readable storage media encoded with instructions executed by a processor is disclosed. Specifically, the instructions cause the processor to generate an error signal based on a difference between a signal representing a force applied on a wire by a push motor and a signal representing a desired force applied on the wire by the push motor; compare a signal representing a force applied on the wire by the pull motor and the error signal, and generate an output signal based on the comparison; and controlling an armature current of the pull motor based on the output signal.

The above description is intended by way of example only. Although the techniques are illustrated and described herein as embodied in one or more specific examples, it is nevertheless not intended to be limited to the details shown, since various modifications and structural changes may be made within the scope and range of equivalents of the claims.

## Claims

1. A method for controlling a pull motor, the method comprising:
generating an error signal based on a difference between a signal representing a force applied on a wire by a push motor and a signal representing a desired force applied on the wire by the push motor;
comparing a signal representing a force applied on the wire by the pull motor and the error signal, and generating an output signal based on the comparison; and
controlling an armature current of the pull motor based on the output signal.

2. The method of claim 1, wherein controlling the armature current of the pull motor further comprises:
when the signal representing the force applied on the wire by the pull motor is greater than the error signal, decreasing the armature current provided to the pull motor, and
when the signal representing the force applied on the wire by the pull motor is less than the error signal, increasing the armature current provided to the pull motor.

3. The method of claim 1, wherein the signal representing the force applied on the wire by the push motor is based on an armature current of the push motor.

4. The method of claim 1, wherein a magnitude of the error signal is regulated based on a resistance of a feedback resistor.

5. The method of claim 1, wherein the output signal controls a switch that controls the armature current provided to the pull motor.

6. The method of claim 1, wherein the output signal is a pulse width modulated (PWM) signal.

7. The method of claim 1, further comprising:
determining when the push motor is in an non-operating state; and
when the push motor is determined to be in the non-operating state, controlling the output signal so that the armature current provided to the pull motor is zero.

8. The method of claim 1, wherein a frequency of the output signal is controlled by a resistor-capacitor (RC) network.

9. An apparatus comprising:
a computer-readable storage medium configured to store computer-executable instructions; and
a processor coupled with the computer-readable storage medium and configured to execute the computer-executable instructions of:
generating an error signal based on a difference between a signal representing a force applied on a wire by a push motor and a signal representing a desired force applied on the wire by the push motor;
comparing a signal representing a force applied on the wire by the pull motor and the error signal, and generating an output signal based on the comparison; and
controlling an armature current of the pull motor based on the output signal.

10. The apparatus of claim 9, wherein controlling the armature current of the pull motor further comprises:
when the signal representing the force applied on the wire by the pull motor is greater than the error signal, decreasing the armature current provided to the pull motor, and
when the signal representing the force applied on the wire by the pull motor is less than the error signal, increasing the armature current provided to the pull motor.

11. The apparatus of claim 9, wherein the signal representing the force applied on the wire by the push motor is based on an armature current of the push motor.

12. The apparatus of claim 9, wherein a magnitude of the error signal is regulated based on a resistance of a feedback resistor.

13. The apparatus of claim 9, wherein the output signal controls a switch that controls the armature current provided to the pull motor.

14. The apparatus of claim 9, wherein the output signal is a pulse width modulated (PWM) signal.

15. The apparatus of claim 9, wherein the computer-executable instructions further comprise:
determining when the push motor is in an non-operating state; and
when the push motor is determined to be in the non-operating state, controlling the output signal so that the armature current provided to the pull motor is zero.

16. The apparatus of claim 9, wherein a frequency of the output signal is controlled by a resistor-capacitor (RC) network.

17. One or more non-transitory computer readable storage media encoded with instructions that, when executed by a processor, cause the processor to:
generate an error signal based on a difference between a signal representing a force applied on a wire by a push motor and a signal representing a desired force applied on the wire by the push motor;
compare a signal representing a force applied on the wire by the pull motor and the error signal, and generating an output signal based on the comparison; and
control an armature current of the pull motor based on the output signal.

18. The one or more non-transitory computer readable storage media of claim 17, wherein the instructions further cause the processor to:
when the signal representing the force applied on the wire by the pull motor is greater than the error signal, decrease the armature current provided to the pull motor, and
when the signal representing the force applied on the wire by the pull motor is less than the error signal, increase the armature current provided to the pull motor.

19. The one or more non-transitory computer readable storage media of claim 17, wherein the signal representing the force applied on the wire by the push motor is based on an armature current of the push motor.

20. The one or more non-transitory computer readable storage media of claim 17, wherein a magnitude of the error signal is regulated based on a resistance of a feedback resistor.
